# FASCICULE DE BREVET EUROPEEN

(11) **EP 2 620 368 B1**
(45) Date de publication et mention de la délivrance du brevet: **14.05.2014**
(21) Numéro de dépôt: 13000137.3
(22) Date de dépôt: 11.01.2013
(51) Int. Cl.: B64D 15/12, B64C 27/605, H01Q 1/28, B64C 27/04

(54) **Dispositif de communication, rotor d'aéronef et aéronef**
Kommunikationsvorrichtung, Rotor eines Luftfahrzeugs und Luftfahrzeug
Communication device, aircraft rotor and aircraft

(30) Priorité: 30.01.2012 FR 1200264
(43) Date de publication de la demande: 31.07.2013
(73) Titulaire: Airbus Helicopters, 13725 Marignane Cedex (FR)
(72) Inventeur: Imbert, Nicolas, F-13008 Marseille (FR); Chuc, Charles, F-13012 Marseille (FR)
(74) Mandataire: GPI & Associés

(56) Documents cités:
- US-A- 4 026 660
- US-A- 5 205 710
- US-A1- 2010 216 398

## Description

La présente invention concerne un dispositif de communication entre un ensemble tournant et un ensemble non tournant, un rotor d'aéronef muni de ce dispositif de communication et un aéronef muni de ce rotor.

L'invention se situe donc dans le domaine technique des moyens de transmission de données entre un équipement présent dans un repère fixe et un équipement présent dans un repère mobile. De plus, les données peuvent être définies dans un format numérique.

La transmission doit être fiable et avantageusement ne doit pas générer des perturbations notables telles que des perturbations électriques. Ces caractéristiques sont notamment recherchées dans une application restreinte au domaine aéronautique qui est particulièrement contraignant et exigeant.

On connaît un collecteur électrique à balais comportant une partie non tournante et une partie tournante reliées par des balais. La partie non tournante possède par exemple des pistes électriques circulaires, la partie tournante ayant un balai circulant sur chaque piste électrique.

Sur un aéronef à voilure tournante, la partie non tournante peut alimenter une pluralité de tapis chauffants présents sur les pales de la voilure tournante selon la séquence programmée dans l'unité électrique pour dégivrer ou empêcher la formation de givre sur la pale. Chaque tapis est alors relié par un câble électrique à un balai de la partie tournante du collecteur électrique.

Ce collecteur électrique est lourd, notamment du fait d'un nombre important de câbles électriques et de pistes électriques.

Ce collecteur électrique peut alors être installé sans difficulté sur un giravion de fort tonnage fortement motorisé. Par contre, son installation sur un giravion de moyen tonnage peut être délicate.

Il parait en outre difficile d'agencer de manière temporaire un tel collecteur électrique, pour réaliser des essais ponctuels et limités dans le temps sur un giravion par exemple.

En outre, les frottements de chaque balai du collecteur contre la piste électrique correspondante tendent à dégrader les performances de ce collecteur électrique. L'usure des balais peut générer des bruits parasites sur les signaux transmis. Des actions de maintenance nécessitant le démontage du dispositif doivent donc être entreprises relativement souvent. Or, le collecteur électrique étant parfois difficile d'accès, le coût de la maintenance peut être élevé et impose un temps d'immobilisation important du giravion.

De plus, un collecteur électrique à balais peut comprendre un nombre d'entrées de données et de fait un nombre de sorties de données limités.

Le document US 201010216398 présente un giravion, ce giravion comportant un mât rotor supportant et entraînant un moyeu d'un rotor du giravion.

Le giravion inclut un dispositif de communication muni d'un module de communication mobile et d'un module de communication fixe. De plus, le mât rotor représente un arbre creux du dispositif de communication.

Une antenne du module de communication mobile dialogue avec une antenne du module de communication fixe au moins partiellement via le mât rotor.

Ce dispositif de communication est intéressant. Toutefois, il présente à l'évidence l'inconvénient de mettre en oeuvre le mât d'un rotor. Dès lors, son intégration sur un aéronef existant peut éventuellement s'avérer délicate.

On connaît par ailleurs des dispositifs de transmission de données sans fils, et notamment des dispositifs mettant en oeuvre des moyens optiques.

Le document US 4625 256 appartient à un domaine technique éloigné de l'invention. Ce document présente en effet un éclateur visant à protéger un ensemble mécanique d'un courant électrique généré par la foudre.

On connaît aussi les documents US 5205710, qui montre toutes les caractéristiques du préambule de la revendication 1, US 4026660, et US 2010/216398.

La présente invention a alors pour objet de proposer un dispositif de communication entre un ensemble tournant et un ensemble non tournant robuste et fiable, ce dispositif pouvant être intégré sur un aéronef existant et tendant à minimiser les actions de maintenance requises, tel que défini par la revendication 1.

L'invention concerne alors un dispositif de communication pour permettre une communication entre un équipement mobile d'un rotor qui tourne autour d'un axe de rotation et un équipement fixe placé sur une structure porteuse dudit rotor.

Ce dispositif de communication est équipé d'un ensemble de plateaux de commande incluant un plateau tournant et un plateau non tournant pour la commande d'un pas de pales du rotor. De plus, le dispositif de communication comporte un boîtier de transfert mobile et un boîtier de transfert fixe échangeant des informations respectivement avec l'équipement mobile et l'équipement fixe. Chaque boîtier de transfert peut par exemple modifier les informations provenant d'un équipement d'une forme numérique en un signal électromagnétique, et inversement.

Ce dispositif de communication est notamment remarquable en ce que chaque boîtier de transfert est relié à une antenne d'émission-réception, une antenne mobile reliée au boîtier de transfert mobile étant fixée au plateau tournant et une antenne fixe reliée au boîtier de transfert fixe étant fixée au plateau non tournant, l'antenne mobile et l'antenne fixe communiquant l'une avec l'autre sans liaison filaire et sans l'intervention d'un arbre creux.

On comprend que les organes qualifiés de « mobile » effectuent un mouvement rotatif avec le rotor, alors que les organes qualifiés de « fixe » n'effectuent pas un tel mouvement rotatif conjointement avec le rotor mais se déplacent conjointement avec la structure porteuse.

On peut se référer à l'état de la technique pour obtenir des renseignements relatifs à un ensemble de plateaux de commande qui est usuellement articulé à une périphérie extérieure d'un mât d'un rotor. Un tel ensemble est en général dénommé « plateaux cycliques » par l'homme du métier.

De même, on peut se référer à l'état de la technique pour obtenir des renseignements relatifs à des boîtiers de transfert interfacés entre un équipement et une antenne.

Dès lors, le dispositif de communication comporte deux antennes placées en vis-à-vis pour communiquer sans fil l'une avec l'autre, chaque antenne étant solidarisée à un plateau d'un ensemble de plateaux de commande.

Ce dispositif de communication peut donc être facilement agencé sur un aéronef existant dans la mesure où il s'interface sur l'ensemble de plateaux de commande, et non pas au sein d'un organe existant tel qu'un mât. De même, le dispositif est démontable, ce dispositif pouvant être utilisé ponctuellement pour un essai par exemple.

La maintenance du dispositif de communication est en outre facilitée, le dispositif de communication étant accessible de l'extérieur.

Par ailleurs, on note que le dispositif de communication met en oeuvre des organes éprouvés tels que des antennes tendant à maximiser sa fiabilité.

Ce dispositif de communication peut de plus comporter une ou plusieurs des caractéristiques additionnelles qui suivent.

Par exemple, le dispositif de communication peut comporter un anneau tournant solidaire d'un plateau tournant et portant l'antenne mobile, ainsi qu'un anneau non tournant solidaire du plateau non tournant et portant l'antenne fixe en vis-à-vis de l'antenne mobile.

Chaque anneau peut être une partie constitutive du plateau associé, ou encore être solidarisé au plateau associé par un moyen de fixation usuel. Eventuellement, chaque anneau peut être réalisé d'un seul tenant ou à partir d'une pluralité d'arcs.

Chaque anneau peut se trouver à la périphérie externe du plateau correspondant.

De plus, au moins une antenne est une antenne circulaire. Selon une réalisation préférée, l'antenne mobile et l'antenne fixe sont toutes deux circulaires.

Cette géométrie permet d'assurer la transmission d'informations sur un tour complet du rotor sans perte de signal.

Par exemple, chaque antenne peut être réalisée directement sur un circuit imprimé fixé à un anneau. Cette technologie permet d'obtenir des antennes de forme diverses à l'aide de multiples matériaux conducteurs.

Selon un autre aspect, au moins un anneau présente une gorge accueillant une antenne. La gorge permet d'au moins limiter les perturbations électromagnétiques générées par l'antenne correspondante. Cette gorge représente en effet un blindage électromagnétique.

De plus, un anneau peut présenter une gorge accueillant une antenne et englobant l'autre anneau.

Par exemple, l'anneau tournant a une section en forme de U délimitant une cavité dans laquelle se trouvent l'antenne mobile et l'anneau non tournant équipé de l'antenne fixe.

La cavité tend alors à limiter les émissions électromagnétiques des deux antennes.

De plus, la section en forme de U est orientée vers l'anneau fixe, le fond de la cavité étant en regard de l'anneau fixe. Ainsi, l'anneau mobile protège les deux antennes contre l'environnement extérieur, et notamment la pluie qui ne peut pas pénétrer dans la cavité.

Cette cavité est par ailleurs réduite. La cavité facilite alors les échanges électromagnétiques entre les deux antennes, et donc permet une forte économie d'énergie relative à l'émission.

En outre, le dispositif peut comporter un joint obturant partiellement la cavité pour minimiser le flux électromagnétique émis par les antennes vers l'extérieur de la cavité, et pour minimiser la pénétration de poussières dans cette cavité.

De telles poussières pouvant dégrader la transmission d'informations d'une antenne vers l'autre antenne, au moins un anneau est éventuellement muni d'une peinture antistatique sur une surface délimitant la cavité.

Outre un dispositif de communication, l'invention vise un rotor muni d'un moyeu portant une pluralité de pales à pas variable et d'un mât portant ledit moyeu, le rotor ayant un dispositif de communication entre un équipement mobile du rotor et un équipement fixe placé sur une structure porteuse de ce rotor, ledit rotor ayant de plus un dispositif de communication équipé d'un ensemble de plateaux de commande incluant un plateau tournant et un plateau non tournant articulé sur ledit mât pour commander ledit pas des pales, ledit dispositif de communication comportant un boîtier de transfert mobile et un boîtier de transfert fixe échangeant des informations respectivement avec l'équipement mobile et l'équipement fixe,

Le dispositif est alors du type décrit précédemment conformément à l'invention.

De même, l'invention vise aussi un aéronef muni d'un rotor et d'une structure porteuse de ce rotor, ce rotor étant du type décrit ci-dessus.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef selon l'invention,
- les figures 2 à 4, des variantes d'un dispositif de communication selon l'invention.

Les éléments présents dans plusieurs figures distinctes sont affectés d'une seule et même référence.

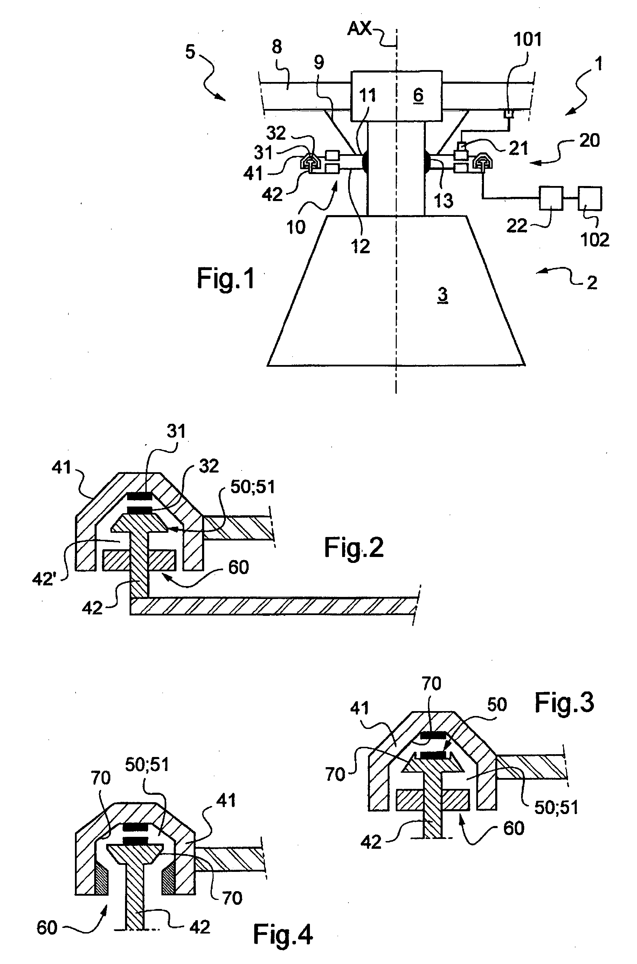

La figure 1 présente un aéronef 1 muni d'une structure porteuse 2 portant un rotor 5, par le biais d'une boîte de transmission de puissance 3 par exemple.

Le rotor 5 inclut alors un moyeu 6 portant une pluralité de pales 8 à pas variable. De plus, le rotor 5 comprend un mât rotor 7 liant le moyeu 6 à la boîte de transmission de puissance 3.

Dès lors, la boîte de transmission de puissance 3 entraîne en rotation autour de l'axe de rotation AX le mât rotor 7, ce mât rotor 7 induisant la rotation du moyeu 6 et des pales 8.

Pour modifier le pas des pales 8, l'aéronef comporte un ensemble 10 de plateaux de commande articulé par une articulation 13 au mât rotor 7.

Cet ensemble 10 est alors muni d'un plateau tournant 11 solidaire en rotation du rotor 5 coopérant avec un plateau non tournant 12 solidaire de la structure porteuse 2. Des moyens de commande non représentés agissent sur le plateau non tournant 12 pour engendrer sa translation le long du mât rotor 7 et/ou sa rotation par rapport au mât rotor 7. Le plateau non tournant 12 répercute son mouvement au plateau tournant 11 qui modifie en conséquence le pas de pales 8 par l'intermédiaire des bielles 9.

Par ailleurs, l'aéronef comprend au moins un équipement mobile 101 solidaire en rotation du rotor 5 autour de l'axe de rotation AX et un équipement fixe 102 solidaire de la structure porteuse 2, tels que des équipements électroniques.

Le rotor 5 inclut alors un dispositif de communication 20 pour permettre à l'équipement mobile 101 d'échanger des informations avec l'équipement fixe 102 et inversement.

Ce dispositif de communication comporte alors un boîtier de transfert mobile 21 relié par une liaison filaire à l'équipement mobile 101. Le boîtier de transfert mobile 21 est solidaire en rotation du rotor 5 en étant fixé par exemple sur une pale 8, sur le mât rotor 7, sur le moyeu 6 ou encore sur le plateau tournant 11.

De même, le dispositif de communication comporte un boîtier de transfert fixe 22 relié par une liaison filaire à l'équipement fixe 102. Le boîtier de transfert fixe 22 est relié à la structure porteuse 2 pour ne pas être solidaire en rotation du rotor 5 autour de l'axe de rotation AX.

Chaque boîtier de transfert peut convertir une information numérique en un signal électromagnétique, et inversement.

De plus, le dispositif de communication inclut les plateaux tournant 11 et non tournant 12. Chaque plateau 11, 12 est solidaire en rotation autour de l'axe de rotation AX d'une antenne d'émission-réception, les deux antennes d'émission-réception communiquant l'une avec l'autre.

Par conséquent, une antenne mobile 31 du dispositif de communication 10 est fixée au plateau tournant 11, cette antenne mobile étant reliée par une liaison filaire au boîtier de transfert mobile 21. De même, une antenne fixe 32 du dispositif de communication 10 est fixée au plateau non tournant 12, cette antenne fixe étant reliée par une liaison filaire au boîtier de transfert fixe 22.

L'antenne mobile 31 et l'antenne fixe 32 sont éventuellement en vis-à-vis pour optimiser leur communication, l'antenne mobile 31 étant l'aplomb de l'antenne fixe 32.

Ainsi, l'équipement fixe 102 peut générer un signal numérique transformé en un signal électromagnétique par le boîtier de transfert fixe 22. Ce signal électromagnétique est envoyé à l'antenne fixe 32 qui le transmet à l'antenne mobile 31. Le signal électromagnétique atteint ensuite le boîtier de transfert mobile 21 qui le transforme en un signal numérique envoyé à l'équipement mobile 101.

De même, un signal mobile généré par l'équipement mobile 101 peut être envoyé à l'équipement fixe 102 par le dispositif de communication 20.

Chaque antenne peut être une antenne circulaire fixée sur un plateau de l'ensemble 10.

Chaque antenne peut aussi être fixée sur un anneau, cet anneau pouvant être une partie d'un plateau ou être fixée à ce plateau.

Dès lors, le dispositif de communication 20 peut comprendre un anneau mobile 41 solidaire du plateau tournant 11 pour porter l'antenne mobile 31, et un anneau fixe 42 solidaire du plateau non tournant 12 pour porter l'antenne fixe 32.

En référence à la figure 2, au moins un anneau peut comporter une gorge 50 accueillant notamment l'antenne correspondante.

Par exemple, l'anneau mobile 41 comporte une telle gorge 50 pour notamment accueillir l'antenne mobile 31.

Ainsi, l'anneau mobile peut avoir une section en forme de U définissant une gorge 50 représentant une cavité 51. Par conséquent, l'antenne mobile 31, l'antenne fixe 32 et au moins une partie distale 42' de l'anneau fixe 42 portant l'antenne fixe 32 peuvent être agencées dans la cavité 51.

En référence à la figure 3, les deux anneaux peuvent comprendre une gorge 50.

L'antenne mobile 41 et l'antenne fixe 42 sont alors à l'abri de la pluie. De plus, les signaux électromagnétiques échangés entre l'antenne mobile 31 et l'antenne fixe 42 tendent à être contenus dans la cavité.

Pour optimiser ces deux avantages, il est possible de prévoir un joint obturant partiellement la cavité 51. L'obturation est partielle pour ne pas entraver le mouvement rotatif de l'anneau mobile 41.

Ce joint 60 peut alors être fixé sur l'anneau mobile 41 conformément à la représentation de la figure 4, ou sur l'anneau fixe 42 conformément à la représentation de la figure 3.

Par ailleurs, les surfaces de l'anneau fixe 42 et de l'anneau mobile 41 délimitant la cavité 51 peuvent être au moins partiellement recouvertes d'une peinture antistatique 70.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de communication (20) pour permettre une communication entre un équipement mobile (101) d'un rotor (5) tournant autour d'un axe de rotation (AX) et un équipement fixe (102) placé sur une structure porteuse (2) dudit rotor (5), ledit dispositif de communication (20) étant équipé d'un ensemble (10) de plateaux de commande incluant un plateau tournant (11) et un plateau non tournant (12) pour la commande d'un pas de pales (8) dudit rotor (5), ledit dispositif de communication (20) comportant un boîtier de transfert mobile (21) et un boîtier de transfert fixe (22) échangeant des informations respectivement avec l'équipement mobile (101) et l'équipement fixe (102),
chaque boîtier de transfert (21, 22) étant relié à une antenne (31, 32) d'émission-réception, une antenne mobile (31) reliée au boîtier de transfert mobile (21) étant fixée au plateau tournant (11) et une antenne fixe (32) reliée au boîtier de transfert fixe (22) étant fixée au plateau non tournant (12), l'antenne mobile (31) et l'antenne fixe (32) communiquant sans fil l'une avec l'autre,
**caractérisé en ce que** ce dispositif de communication (20) comporte d'une part un anneau tournant (41) solidaire du plateau tournant (11) et portant l'antenne mobile (31) et d'autre part un anneau non tournant (42) solidaire du plateau non tournant (12) et portant l'antenne fixe (32) en vis-à-vis de l'antenne mobile (31), au moins un anneau présente une gorge (50) accueillant une antenne.

2. Dispositif de communication (20) selon la revendication 1,
**caractérisé en ce qu'**au moins une antenne est une antenne circulaire.

3. Dispositif de communication (20) selon l'une quelconque des revendications 1 à 2,
**caractérisé en ce qu'**un anneau présente une gorge (50) accueillant une antenne et englobant l'autre anneau.

4. Dispositif de communication (20) selon l'une quelconque des revendications 1 à 3,
**caractérisé en ce que** ledit anneau tournant (41) a une section en forme de U délimitant une cavité (51) dans laquelle se trouve l'antenne mobile (31) et l'anneau non tournant (42) équipé de l'antenne fixe (32).

5. Dispositif de communication (20) selon la revendication 4,
**caractérisé en ce que** ce dispositif de communication (20) comporte un joint (60) obturant partiellement ladite cavité (51).

6. Dispositif de communication (20) selon l'une quelconque des revendications 4 à 5,
**caractérisé en ce qu'**au moins un anneau est muni d'une peinture antistatique (70) sur une surface délimitant ladite cavité (51).

7. Rotor (5) muni d'un moyeu (6) portant une pluralité de pales (8) à pas variable et d'un mât (7) portant ledit moyeu (6), ledit rotor (5) ayant un dispositif de communication (20) entre un équipement mobile (101) du rotor (5) et un équipement fixe (102) placé sur une structure porteuse (2) de ce rotor (5), ledit rotor (5) ayant un dispositif de communication (20) équipé d'un ensemble (10) de plateaux de commande incluant un plateau tournant (11) et un plateau non tournant (12) articulé sur ledit mât (4) pour commander ledit pas des pales (8), ledit dispositif de communication (20) comportant un boîtier de transfert mobile (21) et un boîtier de transfert fixe (22) échangeant des informations respectivement avec l'équipement mobile (101) et l'équipement fixe (102),
**caractérisé en ce que** ledit dispositif de communication (20) est selon l'une quelconque des revendications 1 à 6.

8. Aéronef (1) muni d'un rotor (5) et d'une structure porteuse (2) de ce rotor (5),
**caractérisé en ce que** ledit rotor (5) est selon la revendication 7.

## Patentansprüche

1. Kommunikationsvorrichtung (20) zum Ermöglichen einer Kommunikation zwischen einer mobilen Ausrüstung (101) eines Rotors (5), der sich um eine Drehachse (AX) dreht, und einer ortsfesten Ausrüstung (102), die auf einem Trägeraufbau (2) des Rotors (5) angeordnet ist, wobei die Kommunikationsvorrichtung (20) mit einer Menge (10) von Steuerplatten ausgerüstet ist, die eine sich drehende Platte (11) und eine sich nicht drehende Platte (12) für die Steuerung eines Verstellwinkels von Rotorblättern (8) des Rotors (5) umfassen, wobei die Kommunikationsvorrichtung (20) einen beweglichen Übertragungskasten (21) und einen ortsfesten Übertragungskasten (22) aufweist, die jeweils mit der beweglichen Ausrüstung (101) und der ortsfesten Ausrüstung (102) Informationen austauschen, wobei jeder Übertragungskasten (21, 22) an eine Sende/Empfangsantenne (31, 32) angeschlossen ist, wobei eine bewegliche Antenne (31), die mit dem beweglichen Übertragungskasten (21) verbunden ist, auf der sich drehenden Platte (11) befestigt ist, und eine ortsfeste Antenne (22), die mit dem ortsfesten Übertragungskasten (22) verbunden ist, an der sich nicht drehenden Platte (12) befestigt ist, wobei die bewegliche Antenne (31) und die ortsfeste Antenne (32) drahtlos miteinander kommunizieren,
**dadurch gekennzeichnet, dass** die Kommunikationsvorrichtung (20) einerseits einen sich drehenden Ring (41) aufweist, der fest mit der sich drehenden Platte (11) verbunden ist und die bewegliche Antenne (31) trägt, und die andererseits einen sich nicht drehenden Ring (42) aufweist, der mit der sich nicht drehenden Platte (12) fest verbunden ist und die ortsfeste Antenne (32) gegenüber der beweglichen Antenne (31) trägt, wobei mindestens ein Ring eine Nut (50) aufweist, die eine Antenne aufnimmt.

2. Kommunikationsvorrichtung (20) nach Anspruch 1,
**dadurch gekennzeichnet, dass** mindestens eine Antenne eine kreisförmige Antenne ist.

3. Kommunikationsvorrichtung (20) nach einem der Ansprüche 1 bis 2,
**dadurch gekennzeichnet, dass** ein Ring eine Nut (50) aufweist, die eine Antenne aufnimmt und den anderen Ring umschließt.

4. Kommunikationsvorrichtung (20) nach einem der Ansprüche 1 bis 3,
**dadurch gekennzeichnet, dass** der sich drehende Ring (41) einen U-förmigen Querschnitt aufweist, der einen Hohlraum (51) begrenzt, in dem sich die bewegliche Antenne (31) befindet und der sich nicht drehende Ring (42), der mit der ortsfesten Antenne (32) ausgerüstet ist.

5. Kommunikationsvorrichtung (20) nach Anspruch 4,
**dadurch gekennzeichnet, dass** die Kommunikationsvorrichtung (20) eine Dichtung (60) aufweist, die den Hohlraum (51) teilweise verschließt.

6. Kommunikationsvorrichtung (20) nach einem der Ansprüche 4 bis 5,
**dadurch gekennzeichnet, dass** mindestens eine Antenne mit einem antistatischen Anstrich (70) auf einer Oberfläche versehen ist, die den Hohlraum (51) begrenzt.

7. Rotor (5) mit einer Nabe (6), die eine Mehrzahl von Rotorblättern (8) mit verstellbarem Neigungswinkel trägt, und mit einer Welle (7), die die Nabe (6) trägt, wobei der Rotor (5) eine Kommunikationsvorrichtung (20) aufweist zwischen einer beweglichen Ausrüstung (101) des Rotors (5) und einer ortsfesten Ausrüstung (102), die auf einem Trägeraufbau (2) dieses Rotors (5) angeordnet ist, wobei der Rotor (5) eine Kommunikationsvornchtung (20) aufweist, die mit einer Menge (10) von Steuerplatten ausgerüstet ist, die eine sich drehende Platte (11) und eine sich nicht drehende Platte (12) umfassen, die an der Welle (4) angelenkt ist, um den Neigungswinkel der Rotorblätter (8) zu steuern, wobei die Kommunikationsvorrichtung (20) einen beweglichen Übertragungskasten (21) und einen ortsfesten Übertragungskasten (22) aufweist, die jeweils Informationen mit der beweglichen Ausrüstung (101) und mit der ortsfesten Ausrüstung (102) austauschen,
**dadurch gekennzeichnet, dass** die Kommunikationsvorrichtung (20) gemäß einem der Ansprüche 1 bis 6 ausgestaltet ist.

8. Luftfahrzeug (1) mit einem Rotor (5) und einem Trägeraufbau (2) dieses Rotors (5),
**dadurch gekennzeichnet, dass** der Rotor (5) nach Anspruch 7 ausgestaltet ist.

## Claims

1. Communication device (20) for permitting communication between a movable piece of equipment (101) of a rotor (5) rotating about an axis of rotation (AX) and a stationary piece of equipment (102) placed on a carrier structure (2) for carrying said rotor (5), said communication device (20) being equipped with a set (10) of controlling swashplates including a rotary swashplate (11) and a non-rotary swashplate (12) for pitch control of blades (8) of said rotor (5), said communication device (20) comprising a movable transfer unit (21) and a stationary transfer unit (22) which exchange information respectively with the movable piece of equipment (101) and the stationary piece of equipment (102),
each transfer unit (21, 22) being connected to a transmit-and-receive antenna (31, 32), a movable antenna (31) connected to the movable transfer unit (21) being fastened to the rotary swashplate (11) and a stationary antenna (32) connected to the stationary transfer unit (22) being fastened to the non-rotary swashplate (12), the movable antenna (31) and the stationary antenna (32) communicating with each other wirelessly,
**characterised in that** the communication device (20) comprises on the one hand a rotary ring (41) secured to the rotary swashplate (11) and carrying the movable antenna (31) and on the other hand a non-rotary ring (42) secured to the non-rotary swashplate (12) and carrying the stationary antenna (32) facing the movable antenna (31), at least one of the rings has a groove (50) receiving an antenna.

2. Communication device (20) according to Claim 1, **characterised in that** at least one antenna is a circular antenna.

3. Communication device (20) according to any one of Claims 1 to 2,
**characterised in that** a ring has a groove (50) receiving an antenna and encompassing the other ring.

4. Communication device (20) according to any one of Claims 1 to 3,
**characterised in that** said rotary ring (41) has a U-shaped section defining a cavity (51) in which the movable antenna (31) and the non-rotary ring (42) equipped with the stationary antenna (32) are situated.

5. Communication device (20) according to Claim 4,
**characterised in that** the communication device (20) comprises a seal (60) partially closing said cavity (51).

6. Communication device (20) according to any one of Claims 4 to 5,
**characterised in that** at least one ring is provided with antistatic paint (70) on a surface defining said cavity (51).

7. Rotor (5) provided with a hub (6) carrying a plurality of variable-pitch blades (8), and a mast (7) carrying said hub (6), said rotor (5) having a communication device (20) for communication between a movable piece of equipment (101) of the rotor (5) and a stationary piece of equipment (102) placed on a carrier structure (2) for carrying the rotor (5), said rotor (5) having a communication device (20) equipped with a controlling swashplate assembly (10) including a rotary swashplate (11) and a non-rotary swashplate (12) articulated on said mast (4) in order to control said pitch of the blades (8), said communication device (20) comprising a movable transfer unit (21) and a stationary transfer unit (22) which exchange information respectively with the movable piece of equipment (101) and the stationary piece of equipment (102),
**characterised in that** said communication device (20) is according to any one of Claims 1 to 6.

8. Aircraft (1) provided with a rotor (5) and a carrier structure (2) for carrying the rotor (5),
**characterised in that** said rotor (5) is according to Claim 7.
